# EUROPEAN PATENT APPLICATION

(11) **EP 4 741 461 A2**
(43) Date of publication of application: **13.05.2026**
(21) Application number: 25214272.4
(22) Date of filing: 07.11.2025
(51) Int. Cl.: C08L 95/00

(54) **NON-VOLATILE ROOM-TEMPERATURE MODIFIED ASPHALT BINDER, NON-VOLATILE ROOM TEMPERATURE RECYCLED ASPHALT MIXTURE CONTAINING THE SAME, AND METHOD FOR REPAIRING POTHOLES AND CRACKS USING THE SAME**

(30) Priority: 11.11.2024 KR 20240159126
(71) Applicant: Hansoo Road Industry Co., Ltd., Daejeon (KR)
(72) Inventor: PARK, Joung-ho, Daejeon (KR); KIM, Young-ik, Daejeon (KR)
(74) Representative: HGF

(57) **Abstract**

Provided are a non-volatile room-temperature modified asphalt binder, a non-volatile room-temperature recycled asphalt mixture containing the same, and a method for repairing potholes and cracks using the same. The non-volatile room temperature recycled asphalt mixture according to an example embodiment has improved fluidity, which prevents the occurrence of cracks in existing asphalt, and has the advantages of improved delamination and thermal stability.

## Description

### TECHNICAL FIELD

The following disclosure relates to a non-volatile room-temperature modified asphalt binder, a non-volatile room-temperature recycled asphalt mixture containing the same, and a method for repairing potholes and cracks using the same.

### BACKGROUND

More than 90% of domestic road pavements are concrete or asphalt, but due to increased traffic and heavy vehicles, the durability and service life of roads are significantly deteriorating due to deformation and cracking. Localized heavy rains, heavy snowfall, global warming, etc. have caused road surface temperatures to rise and increased the use of calcium chloride, placing paved roads and sidewalks in much worse conditions than in the past, accelerating damage such as cracking, breakage, and wear.

There are overlay methods and full- and partial-cutting overlay methods for repairing concrete or asphalt pavement, but these methods cause environmental problems and increased treatment costs due to the waste generated from crushing and cutting the existing pavement.

In addition to the overlay method and the cutting overlay method mentioned above, room-temperature asphalt mixtures are used to repair asphalt pavement. Currently, the binders for room-temperature asphalt mixtures primarily include cutback asphalt containing volatile solvents or emulsified asphalt modified with an emulsifier. Specific examples of room-temperature asphalt mixtures are as follows: (a) to (e).
(a) Room-temperature asphalt mixture using cement, fly ash, blast furnace slag powder, limestone, and early curing agent as inorganic binders with emulsified asphalt, modified emulsified asphalt binder (cationic, anionic, etc.), or cutback asphalt;
(b) Room-temperature asphalt mixtures using polymer-modified additives, such as EVA, acrylic polymers, polyvinyl acetate, and acrylic emulsions, as well as surfactants and binders, with emulsified asphalt, modified emulsified asphalt binders (cationic, anionic, moisture vaporization type, etc.);
(c) Room-temperature recycled asphalt mixture manufactured by mixing recycled aggregates with modified additives, recycled additives (vegetable oil, base oil, emulsion, non-heated water-based type, etc.) and fiber additives with emulsified asphalt or modified emulsified asphalt binder;
(d) Room-temperature asphalt mixture manufactured by mixing a polymer-based binder (polyurethane, water-based polyacrylic binder, etc.) with aggregates;
(e) Room-temperature asphalt binders manufactured by mixing straight asphalt, solvents, petroleum resins, colorants, crosslinking agents, etc., and room-temperature asphalt mixtures using these binders;

The problems with conventional room-temperature asphalt binders or room-temperature asphalt mixtures are as follows.

### ① Problems with emulsified asphalt or modified emulsified asphalt-based room-temperature asphalt

Emulsified asphalt refers to asphalt mixed with an emulsifier to prevent it from separating in water and maintain its dispersion. Water is added to asphalt, which is semi-solid at room-temperature, to maintain its liquid state at room-temperature, so its physical properties (penetration, softening point, peel resistance, moisture resistance, elongation, etc.) are inferior to those of straight asphalt.

To overcome the above disadvantages of general emulsified asphalt, modified emulsified asphalt was manufactured and used by adding latex and rubber-based modifiers. Modified emulsified asphalt has greatly improved the above physical properties compared to general emulsified asphalt, but it does not satisfy the fundamental physical properties of asphalt binders. In other words, room-temperature asphalt mixtures using emulsified asphalt or modified emulsified asphalt do not have excellent mechanical properties such as Marshall stability, peel resistance, and indirect tensile strength.

In order to improve the strength properties of emulsified asphalt and modified emulsified asphalt, inorganic binders are used in combination. In this case, although it is advantageous in terms of strength, it reduces the inherent ductility of asphalt, making it very vulnerable to fatigue and low-temperature cracking, requiring continuous maintenance. In addition, the use of inorganic binders such as cement poses a structural problem in that waste asphalt cannot be recycled after cutting for repaving.

### ② Problems with cutback asphalt-based room-temperature asphalt

Asphalt cement, which is semi-solid at room-temperature, is mixed with a volatile petroleum solvent to make it liquid so that it can be used at room-temperature without heating. This is called cutback asphalt. Cutback asphalt varies in its evaporation, drying, and curing rates depending on the type of solvent mixed, and is classified into rapid-curing (RC), medium-curing (MC), and slow-curing (SC) types. Common solvents used in cutback asphalt include gasoline, kerosene, and diesel fuel. Cutback asphalt uses volatile solvents, which can reduce the mechanical properties of asphalt. In particular, the use of volatile solvents makes it highly susceptible to storage stability and long-term durability issues. During storage, evaporation of volatile solvents can cause curing, rendering the material unusable in many cases.

### ③ Problems with polymeric polymer-based room-temperature asphalt

The use of polymeric polymers results in superior mechanical properties compared to emulsified asphalt-based room-temperature asphalt. However, the high tackiness and moisture sensitivity of polymeric polymers make them highly susceptible to storage instability and long-term storage. When aggregate contains moisture, the curing of polymeric polymers is delayed, resulting in a significant reduction in strength. Additionally, when applied to asphalt repair sections exposed to a moist environment, water-induced uncuring reactions impose significant restrictions on its use. Furthermore, the material is highly susceptible to temperature fluctuations during construction, and its use becomes impossible when temperatures drop during winter. Considering that room-temperature asphalt is mainly used in rainy weather and winter, polymer-based room-temperature asphalt is not suitable as room-temperature asphalt.

### ④ Room-temperature asphalt binders and mixtures manufactured using solvents on straight asphalt (same as cutback asphalt)

This is a type of cutback asphalt that uses a solvent to impart fluidity to straight asphalt at room-temperature. This binder and mixture have the same problems as the room-temperature asphalt mixture of the cutback asphalt series described in ② above.

### SUMMARY

An embodiment of the present disclosure is directed to providing a non-volatile room-temperature modified asphalt binder comprising petroleum asphalt, natural asphalt, polymer modifiers, process oil, adhesion enhancers, crack inhibitors, water-repellent additives, carboxymethyl cellulose, and carbon nanotubes.

Another embodiment of the present disclosure is directed to providing a non-volatile room-temperature recycled asphalt mixture comprising the non-volatile room-temperature modified asphalt binder, recycled aggregate, filler, and graphene.

Another embodiment of the present disclosure is directed to providing a non-volatile room-temperature recycled asphalt pouch manufactured by putting the non-volatile room-temperature recycled asphalt mixture into a packaging container.

Another embodiment of the present disclosure is directed to providing a method for repairing potholes and cracks in a road surface, comprising the steps of: operating a road maintenance vehicle to automatically detect potholes and cracks; introducing the non-volatile room-temperature recycled asphalt pouch into the automatically detected potholes and cracks; and compacting the non-volatile room-temperature recycled asphalt pouches that are placed in potholes and cracks by the tire pressure of vehicles traveling on the road.

In one general aspect, a non-volatile room-temperature modified asphalt binder comprises: a) 0.1 to 30 wt% of petroleum asphalt selected from one or more of straight asphalt and blown asphalt; b) 0.1 to 30 wt% of natural asphalt selected from one or more of gilsonite, glance pitch, and grahamite; c) 0.1 to 15 wt% of rubber modification compound (RMC) polymer modifier, which is a vinyl aromatic hydrocarbon-conjugated diene block copolymer using one or more selected from styrene-butadiene block copolymer (SBS), styrene-isoprene block copolymer (SIS), and styrene-ethylene-butylene block copolymer (SEBS); d) 20 to 50 wt% of process oil selected from one or more of paraffin oil, naphthenic oil, aromatic oil, natural oil, and mineral oil; e) 0.5 to 30 wt% of adhesion enhancers selected from one of more of rosin ester-based, modified acrylic-based, modified silicone-based, polyvinyl ester-based, and silicone resin-based compounds; f) 2 to 5 wt% of crack inhibitors selected from one or more of polypropylene glycol and polyethylene glycol; g) 0.2 to 0.5 wt% of water-repellent additives selected from one or more of siloxane and silicone oil; h) 0.1 to 1wt% of carboxymethyl cellulose having a carboxylation degree of 0.5 to 1 and a Brookfield viscosity of 3000 to 4000 cps at 25°C; and i) 0.1 to 0.5 wt% of carbon nanotubes.

In another general aspect, a non-volatile room-temperature recycled asphalt mixture comprises: 1 to 3 wt% of the non-volatile room-temperature modified asphalt binder, 93 to 97 wt% of recycled aggregate, 2 to 4 wt% of filler, and 0.5 to 2 wt% of graphene.

In an example embodiment, the non-volatile room-temperature recycled asphalt mixture may be characterized by being applied to sidewalks, bicycle paths, or walking paths.

In an example embodiment, the non-volatile room-temperature recycled asphalt mixture may be mixed and manufactured at room temperature.

In another general aspect, a non-volatile room-temperature recycled asphalt pouch is manufactured by putting the non-volatile recycled asphalt mixture into a packaging container, wherein the non-volatile room-temperature recycled asphalt pouch may be introduced to potholes and cracks.

In an example embodiment, the non-volatile room-temperature recycled asphalt pouch may be introduced to potholes and cracks and then filled into the potholes and cracks by pressure from the tires of passing vehicles.

In an example embodiment, introducing the non-volatile room-temperature recycled asphalt pouches to the potholes and cracks may involve introducing non-volatile room-temperature recycled asphalt pouches of different sizes depending on the size of the potholes and cracks as vehicles move.

In an example embodiment, the packaging container may be made of an elastic fabric.

In an example embodiment, the elastic fabric may comprise one or more selected from a group consisting of polyurethane, polyethylene, high-density polyethylene, nylon, and spandex.

In another general aspect, a method for repairing potholes and cracks in a road surface, comprises the steps of: operating a road maintenance vehicle to automatically detect potholes and cracks in the road surface; introducing non-volatile room-temperature recycled asphalt pouches into the automatically detected potholes and cracks; and compacting the non-volatile room-temperature recycled asphalt pouches that are placed in potholes and cracks by the tire pressure of vehicles traveling on the road.

In an example embodiment, introducing the non-volatile room-temperature recycled asphalt pouches may be introducing non-volatile room-temperature recycled asphalt pouches of different sizes depending on the size of the potholes and cracks.

In an example embodiment, introducing the non-volatile room-temperature recycled asphalt pouch may be performed automatically by a sensor or manually by a person, but is not necessarily limited thereto.

In an example embodiment, the sensor may comprise a robot, but is not necessarily limited thereto.

Other features and aspects will be apparent from the following detailed description, and the claims.

### DETAILED DESCRIPTION OF EMBODIMENTS

Since the embodiments described in the present specification may be modified in many different forms, the technology according to an example embodiment is not limited to the embodiments set forth herein. Furthermore, throughout the specification, unless otherwise particularly stated, the word "comprising", "including", "containing", "being provided with", or "having" does not mean the exclusion of any other constituent element, but rather means further inclusion of other constituent elements, and elements, materials, or processes which are not further listed are not excluded.

The numerical range used in the present specification includes all values within the range including the lower limit and the upper limit, increments logically derived from the form and spanning of a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also included in the defined numerical range.

Hereinafter, unless otherwise particularly defined in the present specification, "about" may be considered as a value within 30%, 25%, 20%, 15%, 10%, 5%, 3%, 2%, 1%, or 0.5% of a stated value.

Hereinafter, the present disclosure will be described in detail (with reference to the accompanying drawings). However, it is only illustrative, and the present disclosure is not limited to the specific embodiments which are illustratively described in some embodiments of the disclosed technology.

An example embodiment provides a non-volatile room-temperature modified asphalt binder comprising: a) 0.1 to 30 wt% of petroleum asphalt selected from one or more of straight asphalt and blown asphalt; b) 0.1 to 30 wt% of natural asphalt selected from one or more of gilsonite, glance pitch, and grahamite; c) 0.1 to 15 wt% of rubber modification compound (RMC) polymer modifier, which is a vinyl aromatic hydrocarbon-conjugated diene block copolymer using one or more selected from styrene-butadiene block copolymer (SBS), styrene-isoprene block copolymer (SIS), and styrene-ethylene-butylene block copolymer (SEBS); d) 20 to 50 wt% of process oil selected from one or more of paraffin oil, naphthenic oil, aromatic oil, natural oil, and mineral oil; e) 0.5 to 30 wt% of adhesion enhancers selected from one of more of rosin ester-based, modified acrylic-based, modified silicone-based, polyvinyl ester-based, and silicone resin-based compounds; f) 2 to 5 wt% of crack inhibitors selected from one or more of polypropylene glycol and polyethylene glycol; g) 0.2 to 0.5 wt% of water-repellent additives selected from one or more of siloxane and silicone oil; h) 0.1 to 1wt% of carboxymethyl cellulose having a carboxylation degree of 0.5 to 1 and a Brookfield viscosity of 3000 to 4000 cps at 25°C; and i) 0.1 to 0.5 wt% of carbon nanotubes.

In an example embodiment, the petroleum asphalt and natural asphalt are used as the main components of a non-volatile room-temperature modified asphalt binder to impart the inherent ductility of asphalt, and by adding polymer modifiers, process oils, adhesion enhancers, crack inhibitors, and water-repellent additives, the mechanical properties, long-term storage stability, and stability can be improved.

In an example embodiment, the petroleum asphalt refers to asphalt remaining after distilling petroleum to extract components with low boiling points, such as gasoline, naphtha, and kerosene. The petroleum asphalt may be straight asphalt and/or blown asphalt, but is not necessarily limited thereto. Petroleum asphalt becomes liquid at high temperatures and very hard at low temperatures, and its temperature sensitivity may vary depending on the type of asphalt. In addition, it has high plasticity, water resistance, electrical insulation, and adhesiveness, and may have chemically stable characteristics.

In an example embodiment, the natural asphalt is referred to as asphaltite, which has a higher melting point than conventional asphalt. Natural asphalt may be one or more selected from the group consisting of gilsonite, glance pitch, and grahamite, but is not necessarily limited thereto. In particular, gilsonite has been produced for commercial purposes since 1885, is composed of natural hydrocarbons, and may consist of approximately 71% asphaltene, 27% malathion, 3.2% nitrogen, and 0.3% sulfur.

In an example embodiment, mixing the petroleum asphalt and natural asphalt prevents deformation caused by excessive softening of the binder at high temperatures in summer and prevents detachment caused by reduced adhesion to aggregates. The petroleum asphalt and natural asphalt may each be 0.1 to 30 wt% based on 100 wt% of the non-volatile room-temperature modified asphalt binder, but are not necessarily limited to this. When petroleum asphalt and natural asphalt are used at less than 0.1 wt%, the asphalt pavement cannot exhibit its inherent plasticity due to insufficient asphalt content in the non-volatile room-temperature modified asphalt binder. In addition, when used in excess of 30 wt%, the viscosity of the non-volatile room-temperature modified asphalt binder increases significantly, making it difficult to maintain a liquid state at room-temperature, which not only makes it difficult to produce room-temperature asphalt, but also reduces the storage stability and shelf life of room-temperature asphalt after production, making long-term storage impossible.

In an example embodiment, the polymer modifier is a rubber modifier compound (RMC) polymer modifier that is a vinyl aromatic hydrocarbon-conjugated diene block copolymer, said vinyl aromatic hydrocarbon-conjugated diene block copolymer may be one or more selected from the group consisting of styrene-butadiene block copolymer (SBS), styrene-isoprene block copolymer (SIS), and styrene-ethylene-butylene block copolymer (SEBS), but is not necessarily limited thereto.

In an example embodiment, the polymer modifier may be 0.1 to 15 wt% based on 100 wt% of the non-volatile room-temperature modified asphalt binder, but is not necessarily limited thereto. If the polymer modifier is used in an amount of less than 0.1 wt%, the modifying effect is insufficient, and when it exceeds 15 wt%, the viscosity of the non-volatile room-temperature modified asphalt binder increases significantly at room-temperature, preventing it from maintaining a liquid state at room-temperature, making it impossible to produce recycled asphalt mixture at room-temperature. Furthermore, even after the recycled asphalt mixture is produced, its high viscosity and self-adhesiveness make it difficult to store the recycled asphalt mixture for long periods at room-temperature and to apply it at the construction site at room-temperature.

In an example embodiment, the process oil may lower the viscosity and increase the adhesiveness of a non-volatile room-temperature modified asphalt binder that is in a semi-solid state at room-temperature so that it can be used in combination with aggregate. In addition, the process oil may be adsorbed onto the old asphalt binder contained in the asphalt aggregate to elute the asphalt binder and impart expandability. In an example embodiment, the process oil may be one or more selected from a group consisting of paraffin oil, naphthenic oil, aromatic oil, natural oil, and mineral oil, but is not necessarily limited thereto.

In an example embodiment, the process oil may be 20 to 50 wt% based on 100 wt% of non-volatile room-temperature modified asphalt binder, but is not necessarily limited thereto. If the process oil is used at less than 20 wt%, the viscosity of the asphalt binder cannot be sufficiently lowered and the adhesiveness cannot be sufficiently increased, so that the asphalt binder cannot be sufficiently endowed with exudation and expansion properties. If more than 50 wt% is used, the viscosity of the asphalt binder becomes too low, and the room-temperature asphalt may plastically deform or the binder may soften in high temperatures in summer.

In an example embodiment, the adhesion enhancer is used to increase the adhesion between aggregates or between the aggregate and the asphalt to prevent initial separation, strengthen the bonding, and increase the temperature sensitivity of the expansive binder component to prevent plastic deformation and cracking due to temperature changes. In an example embodiment, the adhesion enhancer may be one or more selected from the group consisting of rosin ester-based, modified acrylic-based, modified silicone-based, polyvinyl ester-based, and silicone based resin, but is not necessarily limited thereto.

In an example embodiment, the adhesion enhancer may be 0.5 to 30 wt% based on 100 wt% of a non-volatile room-temperature modified asphalt binder, but is not necessarily limited thereto. If the adhesion enhancer is used at less than 0.5 wt%, the adhesion does not increase sufficiently, and if it is used at more than 30 wt%, the initial adhesion increases, and the workability at the application site may be reduced due to adhesion between aggregates during storage.

In an example embodiment, the crack inhibitor is added to a non-volatile room-temperature modified asphalt binder to weaken large intermolecular interactions in the asphalt, thereby improving low-temperature fluidity. By adding the crack inhibitor, the glass transition temperature (Tg) is lowered at low temperatures, and the fluidity of the asphalt is increased, so that the asphalt may remain flowable even at low temperatures and cracking can be prevented. Specifically, due to the crack inhibitor, the non-volatile room-temperature modified asphalt binder may maintain its fluidity without stiffening even at temperatures below -20°C, for example, -60°C to -20°C, -50°C to -25°C, or -45°C to - 30°C, thereby preventing cracking.

In an example embodiment, the crack inhibitor may be a polyalkylene glycol, such as polypropylene glycol and/or polyethylene glycol, but is not necessarily limited thereto. In addition, the crack inhibitor may be 2 to 5 wt% based on 100 wt% of a non-volatile room-temperature modified asphalt binder, but is not necessarily limited thereto. If the crack inhibitor is used at less than 2 wt%, the effect of increasing fluidity is not observed, and if it is used at more than 5 wt%, the viscosity of the asphalt binder is significantly reduced, which may reduce the coating thickness of the aggregate.

In an example embodiment, the water-repellent additive is a material that minimizes delamination between the non-volatile room-temperature modified asphalt binder and the aggregate, and may be, for example, siloxane and/or silicone oil, but is not necessarily limited thereto. In addition, the water-repellent additive may be 0.2 to 0.5 wt% based on 100 wt% of the non-volatile room-temperature modified asphalt binder, but is not necessarily limited thereto, and if less than 0.2 wt% or more than 0.5 wt% is used, separation between the binder and the aggregate may occur.

In an example embodiment, the carboxymethylcellulose may be 0.1 to 1 wt% based on 100 wt% of the non-volatile room-temperature modified asphalt binder, but is not necessarily limited thereto. Specifically, the carboxymethylcellulose may be 0.2 to 0.9 wt%, 0.3 to 0.8 wt%, or 0.4 to 0.7 wt%. In an example embodiment, the carboxylation is 0.5 to 1, and the Brookfield viscosity at 25°C is 3000 to 4000 cps, but this is not necessarily limited thereto. In this case, the carboxylation of the carboxymethylcellulose refers to the average number of carboxymethyl groups per anhydroglucose ring.

In an example embodiment, the carbon nanotubes may act as a strong reinforcing material in the non-volatile room-temperature modified asphalt binder, improving mechanical strength, durability, and thermal stability. At high temperatures, the carbon nanotubes may enhance the flow resistance of the non-volatile room-temperature modified asphalt binder, preventing plastic deformation and inhibiting the growth of microcracks in the asphalt.

Another example embodiment provides a non-volatile room-temperature recycled asphalt mixture comprising 1 to 3 wt% of the non-volatile room-temperature modified asphalt binder, 93 to 97 wt% of recycled aggregate, 2 to 4 wt% of filler, and 0.5 to 2 wt% of graphene. Herein, since the above descriptions of the non-volatile room-temperature modified asphalt binder may be applied identically to the non-volatile room-temperature modified asphalt binder, repeated descriptions will be omitted below.

In an example embodiment, the graphene is a two-dimensional nanomaterial composed of carbon atoms, which improves strength and toughness in the non-volatile room-temperature recycled asphalt mixture, increasing crack resistance and improving fatigue resistance, thereby extending the pavement life.

In an example embodiment, the graphene may be 0.5 to 2 wt% based on 100 wt% of a non-volatile room-temperature recycled asphalt mixture, but is not necessarily limited thereto. If the graphene is used at less than 0.5 wt%, there is no improvement in mechanical properties such as strength and toughness, and when it is used at more than 2 wt%, agglomeration may occur during the mixture manufacturing process, causing quality degradation.

In an example embodiment, the non-volatile room-temperature recycled asphalt mixture may be applied to sidewalks, bicycle paths, or walking paths, but is not necessarily limited thereto.

In an example embodiment, the non-volatile room-temperature recycled asphalt mixture may be characterized by adding pigment to color the road surface.

Another example embodiment provides a non-volatile room-temperature recycled asphalt pouch manufactured by putting the non-volatile recycled asphalt mixture into a packaging container, wherein the non-volatile room-temperature recycled asphalt pouch may be introduced to potholes and cracks. Herein, since the above descriptions of the non-volatile room-temperature recycled asphalt mixture may be applied identically to the non-volatile room-temperature recycled asphalt mixture, repeated descriptions will be omitted below.

In an example embodiment, potholes and cracks refer to damaged portions of asphalt roads and/or road surfaces, and may be all or part of asphalt roads and/or road surfaces that require repair.

In an example embodiment, the non-volatile room-temperature recycled asphalt pouch may be introduced into the potholes and cracks and then filled with the potholes and cracks by pressure from the tires of passing vehicles.

In an example embodiment, introducing the non-volatile room-temperature recycled asphalt pouches into the potholes and cracks may involve introducing non-volatile room-temperature recycled asphalt pouches of different sizes depending on the size of the potholes and cracks as vehicles move.

In an example embodiment, the packing container may be made of an elastic fabric.

In an example embodiment, the elastic fabric may comprise one or more selected from a group consisting of polyurethane, polyethylene, high-density polyethylene, nylon, and spandex, but is not necessarily limited thereto.

Another example embodiment provides a method for repairing potholes and cracks in a road surface, comprising the steps of: operating a road maintenance vehicle to automatically detect potholes and cracks in the road surface; introducing non-volatile room-temperature recycled asphalt pouches into the automatically detected potholes and cracks; and compacting the non-volatile room-temperature recycled asphalt pouches that are placed in potholes and cracks by the tire pressure of vehicles traveling on the road. Herein, since the above descriptions of the non-volatile room-temperature recycled asphalt pouch may be applied identically to the non-volatile room-temperature recycled asphalt pouch, repeated descriptions will be omitted below.

In an example embodiment, introducing the non-volatile room-temperature recycled asphalt pouch may be introducing non-volatile room-temperature recycled asphalt pouches of different sizes depending on the size of the pothole and crack.

In an example embodiment, introducing the non-volatile room-temperature recycled asphalt pouch may be performed automatically by a sensor or manually by a person, but is not necessarily limited thereto.

In an example embodiment, the sensor may comprise a robot, but is not necessarily limited thereto.

Hereinafter, the examples will be further described with reference to the specific experimental examples. It is apparent to those skilled in the art that the examples and the comparative examples included in the experimental examples only illustrate an example embodiment and do not limit the appended claims, and various modifications and alterations of the examples may be made within the range of the scope and spirit of the present disclosure, and these modifications and alterations will fall within the appended claims.

### <Example 1> Preparation of non-volatile room-temperature recycled asphalt mixture

2 wt% of non-volatile room-temperature modified asphalt binder, 95 wt% of recycled aggregate, 3 wt% of filler, and 1 wt% of graphene were mixed at room temperature to prepare non-volatile room-temperature recycled asphalt mixture.

The method for preparing the non-volatile room-temperature modified asphalt binder is as follows. 15 wt% of petroleum asphalt and 15% wt of natural asphalt were heated to 165 °C, and 10% by weight of an RMC polymer modifier was added to the mixture of petroleum asphalt and natural asphalt. The mixture was stirred in a batch plant at 175 °C for 3 hours or more. Subsequently, 12% wt of an adhesion enhancer was added to the mixture and stirred at 175 °C for 1 hour or more, followed by the addition of 30% wt of process oil and stirring at 175 °C for 1 hour or more. Thereafter, 3% wt of polypropylene glycol as a crack inhibitor, 0.3% wt of silicone oil as a water-repellent additive, 0.5% wt of carboxymethyl cellulose (degree of carboxylation: 0.7; Brookfield viscosity at 25 °C: 3500 cps), and 0.2% wt of carbon nanotubes were added, and the mixture was stirred at 170 °C for 1 hour or more and then cooled to obtain a non-volatile room-temperature modified asphalt binder.

### <Example 2> Preparation of non-volatile room-temperature recycled asphalt mixture

A non-volatile room-temperature modified asphalt binder mixture was prepared in the same manner as in Example 1, except that 3 wt% of non-volatile room-temperature modified asphalt binder and 1.5 wt% of graphene were mixed.

### <Example 3> Preparation of non-volatile room-temperature recycled asphalt mixture

A non-volatile room-temperature recycled asphalt mixture was prepared in the same manner as in Example 1, except that 1 wt% of non-volatile room-temperature modified asphalt binder and 0.5 wt% of graphene were mixed.

### <Comparative Example 1> Preparation of asphalt mixture

An asphalt mixture was prepared in the same manner as in Example 1, except that 6 wt% of cutback asphalt binder (D company) heated to 55°C was added instead of the non-volatile room-temperature modified asphalt binder, and no graphene was added.

### <Comparative Example 2> Preparation of asphalt mixture

An asphalt mixture was prepared in the same manner as in Example 1, except that 7 wt% of room-temperature emulsified asphalt binder was added instead of the non-volatile room-temperature modified asphalt binder, and 5 wt% of graphene was added.

### <Comparative Example 3> Preparation of asphalt mixture

5 wt% of non-volatile room-temperature modified asphalt binder, 95 wt% of recycled aggregate, and 3 wt% of filler were mixed at room temperature to prepare an asphalt mixture.

Herein, the non-volatile room-temperature modified asphalt binder was prepared in the same manner as in Example 1, except that 1 wt% of polypropylene glycol and 2 wt% of carboxymethyl cellulose (carboxylation: 1.2, Brookfield viscosity at 25°C: 3500 cps) were added.

### <Experimental Example 1> Experiment on resistance to plastic flow of mixtures

The resistance to plastic flow of the mixture was measured using a Marshall tester in accordance with KS F 2337, and the results are shown in Table 1 below.

**[Table 1]**

| Category | Examp le 1 | Examp le 2 | Examp le 3 | Compara tive example 1 | Compara tive example 2 | Compara tive example 3 |
|---|---|---|---|---|---|---|
| Marshall stability (N) | 4580 | 4720 | 4230 | 2510 | 4650 | 3190 |
| Flow (1/10 0 cm) | 33 | 38 | 31 | 35 | 21 | 30 |
| Porosity (%) | 5.1 | 4.7 | 5.7 | 15.4 | 9.8 | 9.1 |
| Dynamic stability (times/mm ) | 1145 | 1320 | 1054 | 120 | 651 | 745 |

The non-volatile room-temperature recycled asphalt mixture manufactured in Example 1 to 3 has significantly higher Marshall stability than the comparative examples, and since the non-volatile room-temperature modified asphalt binder manufactured in Example 1 to 3 contains carbon nanotubes, it can be seen that the mixture of the example is significantly more stable than the comparative example in terms of dynamic stability. In addition, since the non-volatile room-temperature recycled asphalt mixture manufactured in example contains polypropylene glycol as a crack inhibitor, it can prevent cracking of the asphalt even at low temperatures and has a significantly lower porosity than the comparative example. In particular, comparative example 3 contains carboxymethyl cellulose with a carboxylation of 1.2, which does not fall within the carboxylation range of the carboxymethyl cellulose in the example embodiment of the present disclosure. As a result, it can be seen that the asphalt mixture of the example has significantly higher fluidity, porosity, and stability than the comparative examples.

### <Experimental Example 2> Tensile adhesion strength test

The tensile adhesion strength of the road pavement surface was measured in accordance with KS F 2386, and the results are shown in Table 2 below.

**[Table 2]**

| Category | | Example 1 | Example 2 | Comparative example 1 | Comparative example 2 |
|---|---|---|---|---|---|
| Dry | Asphalt pavement | 0.78 | 0.85 | 0.14 | 0.12 |
| | Concrete pavement | 0.57 | 0.62 | 0.09 | 0.11 |
| Wet | Asphalt pavement | 0.67 | 0.77 | 0(Not measurable) | 0.07 |
| | Concrete pavement | 0.52 | 0.59 | 0(Not measurable) | 0.05 |

The embodiments of the non-volatile room-temperature modified asphalt binder contain silicone oil as a water-repellent additive, so the asphalt mixture of Example 1 and 2 has significantly higher adhesion to asphalt and concrete pavement than the comparative examples, not only in the dry state but also in the wet state. Therefore, when the asphalt binder of the present disclosure is used in rainy weather or winter, the adhesion to aggregates is greatly improved, thereby solving the issue that conventional asphalt binders could not be used in rainy weather or winter.

The above description is only an example to which the principle of the present disclosure is applied, and other constitutions may be further included without departing from the scope of the present disclosure. Hereinabove, though an implementation has been described in detail by the examples and the experimental examples, the scope of an implementation is not limited to specific examples and should be construed by the appended claims.

## Claims

1. A non-volatile room-temperature modified asphalt binder comprising:
a) 0.1 to 30 wt% of petroleum asphalt selected from one or more of straight asphalt and blown asphalt;
b) 0.1 to 30 wt% of natural asphalt selected from one or more of gilsonite, glance pitch, and grahamite;
c) 0.1 to 15 wt% of rubber modification compound (RMC) polymer modifier, which is a vinyl aromatic hydrocarbon-conjugated diene block copolymer using one or more selected from styrene-butadiene block copolymer (SBS), styrene-isoprene block copolymer (SIS), and styrene-ethylene-butylene block copolymer (SEBS);
d) 20 to 50 wt% of process oil selected from one or more of paraffin oil, naphthenic oil, aromatic oil, natural oil, and mineral oil;
e) 0.5 to 30 wt% of adhesion enhancers selected from one of more of rosin ester-based, modified acrylic-based, modified silicone-based, polyvinyl ester-based, and silicone based resin;
f) 2 to 5 wt% of crack inhibitors selected from one or more of polypropylene glycol and polyethylene glycol; g) 0.2 to 0.5 wt% of water-repellent additives selected from one or more of siloxane and silicone oil;
h) 0.1 to 1wt% of carboxymethyl cellulose having a carboxylation degree of 0.5 to 1 and a Brookfield viscosity of 3000 to 4000 cps at 25°C; and
i) 0.1 to 0.5 wt% of carbon nanotubes.

2. A non-volatile room-temperature recycled asphalt mixture comprising: 1 to 3 wt% of the non-volatile room-temperature modified asphalt binder; 93 to 97 wt% of recycled aggregate; 2 to 4 wt% of filler; and 0.5 to 2 wt% of graphene.

3. The non-volatile room-temperature recycled asphalt mixture of claim 2, wherein the non-volatile room-temperature recycled asphalt mixture is **characterized by** being applied to sidewalks, bicycle paths, or walking paths.

4. The non-volatile room-temperature recycled asphalt mixture of claim 2, wherein the non-volatile room-temperature recycled asphalt mixture is mixed and manufactured at room temperature.

5. A non-volatile room-temperature recycled asphalt pouch manufactured by putting the non-volatile recycled asphalt mixture according to claim 2 into a packaging container, wherein the non-volatile room-temperature recycled asphalt pouch is introduced into potholes and cracks.

6. The non-volatile room-temperature recycled asphalt pouch of claim 5, wherein the non-volatile room-temperature recycled asphalt pouch is introduced to potholes and cracks and then filled into the potholes and cracks by pressure from the tires of passing vehicles.

7. The non-volatile room-temperature recycled asphalt pouch of claim 5, wherein introducing the non-volatile room-temperature recycled asphalt pouches to the potholes and cracks involves introducing non-volatile room-temperature recycled asphalt pouches of different sizes depending on the size of the potholes and cracks as vehicles move.

8. The non-volatile room-temperature recycled asphalt pouch of claim 5, the packaging container is made of an elastic fabric.

9. The non-volatile room-temperature recycled asphalt pouch of claim 8, the elastic fabric comprises one or more selected from a group consisting of polyurethane, polyethylene, high-density polyethylene, nylon, and spandex.

10. A method for repairing potholes and cracks in a road surface, comprising the steps of:
1) operating a road maintenance vehicle to automatically detect potholes and cracks in the road surface;
2) introducing non-volatile room-temperature recycled asphalt pouches into the automatically detected potholes and cracks; and
3) compacting the non-volatile room-temperature recycled asphalt pouches that are placed in potholes and cracks by the tire pressure of vehicles traveling on the road.

11. The method for repairing potholes and cracks in a road surface of claim 10, wherein introducing the non-volatile room-temperature recycled asphalt pouches is introducing non-volatile room-temperature recycled asphalt pouches of different sizes depending on the size of the potholes and cracks.

12. The method for repairing potholes and cracks in a road surface of claim 10, wherein introducing the non-volatile room-temperature recycled asphalt pouch is performed automatically by a sensor or manually by a person.

13. The method for repairing potholes and cracks in a road surface of claim 12, wherein the sensor comprises a robot.
